# EUROPÄISCHE PATENTANMELDUNG

(11) **EP 1 741 965 A1**
(43) Veröffentlichungstag der Anmeldung: **10.01.2007**
(21) Anmeldenummer: 06116560.1
(22) Anmeldetag: 04.07.2006
(51) Int. Cl.: F16L 3/10

(54) **Rohrschelle**

(30) Priorität: 07.07.2005 CH 11312005
(71) Anmelder: ZURECON AG, CH-8003 Zürich (CH)
(72) Erfinder: Pfluger, Gerd, CH-4625, Oberbuchsiten (CH)
(74) Vertreter: Rutz & Partner

(57) **Zusammenfassung**

Die der Montage von Leitungen (2), insbesondere Rohren, dienende Rohrschelle (1) weist ein Systemelement (11) mit einem der Montage der Rohrschelle (1) dienenden Montageteil (112) und einem der Aufnahme wenigstens einer Leitung (2) dienenden Aufnahmeteil (111) auf, welches an zwei Endstücken (1112; 1112') mit zwei dazu korrespondierenden Endstücken (122; 122') eines dem Halten der in das Aufnahmeteil (111) eingelegten Leitung (2) dienenden Abschlussbügels (12) derart verbindbar und abschliessbar ist, dass die Leitung (2) vom Aufnahmeteil (111) und vom Abschlussbügel (12) umschlossen ist. Erfindungsgemäss sind die paarweise einander zugeordneten Endstücke (1112, 122 bzw. 1112', 122') des Aufnahmeteils (111) und des Abschlussbügels (12) mit zumindest endseitig geschlossenen Längsschlitzen (1111, 121 bzw. 1111', 121') versehen, die paarweise je vom Schaft (81) einer mit einer Schraubenmutter (85) verbundenen Verbindungsschraube (8) durchstossen sind, und von denen wenigstens ein Paar der zueinander korrespondierenden Längsschlitze (1111, 121) und/oder (1111', 121') mit schräg oder senkrecht zu den Achsen (x) der Längsschlitze (1111, 121) verlaufenden Seitenschlitzen (11110', 1210') versehen ist, von denen wenigstens ein Seitenschlitz (1210') nach aussen geöffnet ist, so dass der Schaft (81) der Verbindungsschraube (8) durch Führung entlang der beiden zueinander korrespondierenden Seitenschlitze (11110', 1210') vollständig aus dem zugehörigen Endstück (122') entfernt werden kann.

## Beschreibung

Die Erfindung betrifft eine der Befestigung von Leitungen, insbesondere Rohren dienende Rohrschelle nach dem Oberbegriff des Patentanspruchs 1.

Für die Zuführung und Verteilung von Medien wie Elektrizität, Gas, Wasser, Fernwärme, Telefon, Kabel TV in Bauten werden Installations- und Montagevorrichtungen verwendet, wie sie in [1], Produktkatalog der LANZ OENSINGEN AG, April 2003 gezeigt und beschrieben sind. Beispielsweise werden von Trägern oder Stützen gehaltene Kabelkanäle oder Gitterbahnen verwendet, in welche die zu installierenden Rohre, Leitungen und Kabel eingelegt werden.

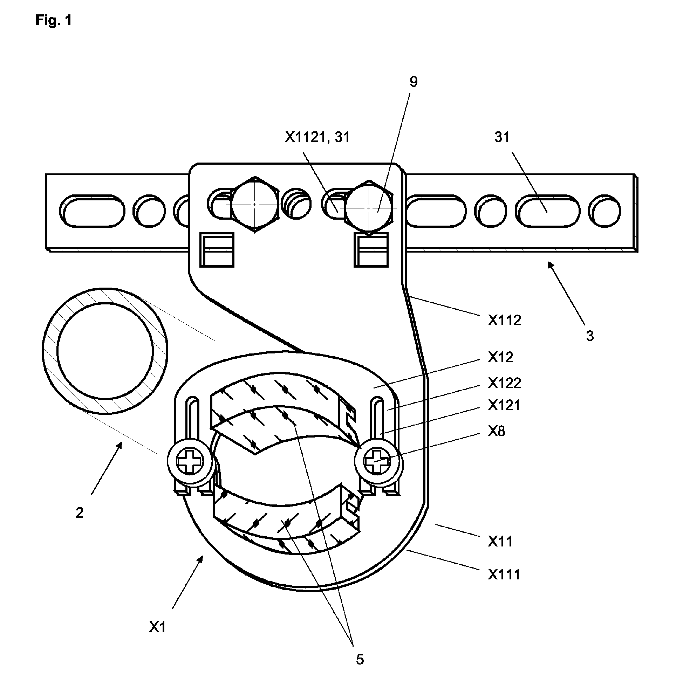

Zur Installation einzelner Rohre und Leitungen werden Rohrschellen verwendet, wie sie in [1], Seiten 60-65 beschrieben und nachstehend in den Figuren 1 bis 3 im Detail dargestellt sind. Rohrschellen dieser Art werden an Trägern, Stützen, Auslegern, Profilteilen oder direkt an Wand oder Decke montiert.

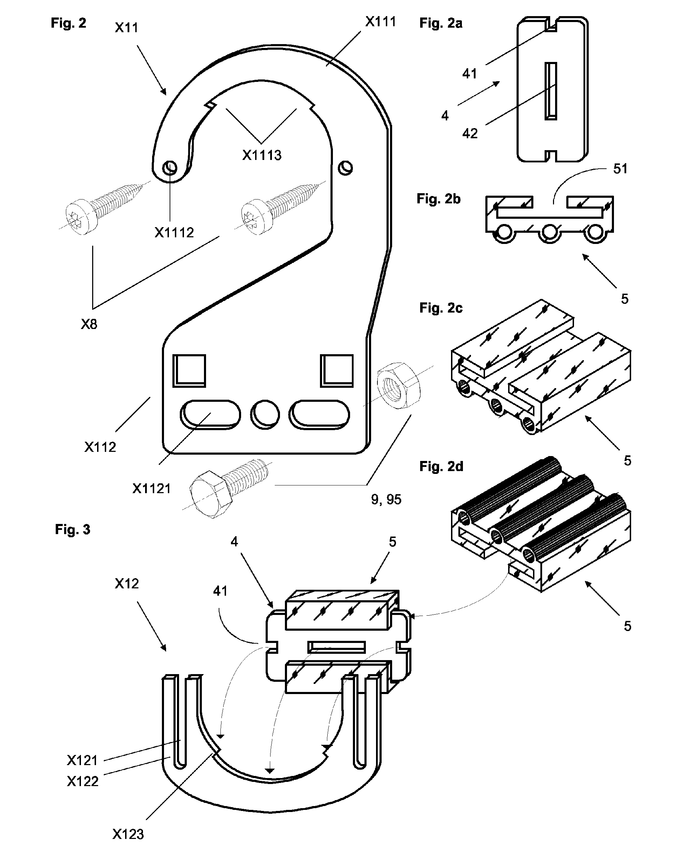

Figur 1 zeigt die in [1], Seite 61 gezeigte Rohrschelle vom Typ V, die an einer mit Montageöffnungen 31 versehenen Profilschiene 3 montiert ist. Diese bekannte Rohrschelle X1, die anhand der Figuren 2 und 3 näher erläutert wird, weist ein Systemelement X11 auf, an dem ein der Aufnahme eines Rohres 2 dienendes und mit einem Abschlussbügel X12 abschliessbares Aufnahmeteil X111 und ein mit Montageöffnungen X1121 versehenes Montageteil X112 vorgesehen ist. Das Aufnahmeteil X111, das eine annähernd halbkreisförmige Ausnehmung aufweist, ist beidseits der Ausnehmung mit Gewindebohrungen versehen, in die der Befestigung des Abschlussbügels X12 dienende Verbindungsschrauben X8 eindrehbar sind. Der mit einer annähernd halbkreisförmigen Ausnehmung versehene Abschlussbügel X12, der die Form eines gegen das Aufnahmeteil X111 geöffneten Bogens aufweist, weist beidseits der Ausnehmung gabelförmige Endstücke X122 mit nach aussen geöffneten Schlitzen X121 auf, die, wie in Figur 1 gezeigt, je der Aufnahme eines Schafts der Verbindungsschrauben X8 dienen. Nach dem Lösen der Verbindungsschrauben X8 kann der Abschlussbügel X12 soweit gegen das Aufnahmeteil X111 verschoben werden, bis das installierte Rohr 2 fest umschlossen ist.

Zur Vermeidung von störenden Druckstellen, zum elastischen Halten und gegebenenfalls zur Isolation des Rohrs 2 sind das Aufnahmeteil X111 und der Abschlussbügel X12 an den einander zugewandten Seiten mit elastischen bzw. flächigen Stützelementen 4, 5 versehen. Figur 2a zeigt ein nahezu rechteckiges Federblatt 4 aus Stahl, das an beiden Enden mit Kerben 41 und einem Mittelschlitz 41 versehen ist. Das Federblatt 4 kann derart in den Abschlussbügel X12 oder das Aufnahmeteil X111 eingelegt werden, dass zwei dort vorgesehene Haken X1113 bzw. X123 von entgegengesetzten Richtungen in die Kerben 41 eingreifen und das Federblatt 4 nach unten gebogen halten, wobei zusätzlich Elemente des Abschlussbügels X12 oder des Aufnahmeteils X111 in den Mittelschlitz 41 eingreifen und das Federblatt 4 stabilisieren.

Die Figuren 2b, 2c und 2d zeigen in zwei- und dreidimensionalen Darstellungen ein extrudiertes Kunststoffelement 5 in der Form eines der Aufnahme des Federblatts 4 dienenden T-Profils. Figur 3 zeigt ein Kunststoffelement 5 mit einem eingelegten Federblatt 4 während der Montage am Abschlussbügel X12. Möglich ist natürlich auch, das Federblatt 4 zuerst zu montieren und das Kunststoffelement 5 anschliessend aufzusetzen.

Durch die Montageöffnungen X1121, 31 des Montageteils X112 und der Profilschiene 3 hindurch sind Montageschrauben 9 führbar, mittels derer die Rohrschelle X1 fest mit der Profilschiene 3 verbindbar ist.

Obwohl sich diese Rohrschelle X1 in der Praxis bewährt hat, sind die nachstehend beschriebenen Nachteile feststellbar. Der Abschlussbügel X12 und des Aufnahmeteils X111 sind mittels der Verbindungsschrauben X8 kraftschlüssig miteinander verbunden. Sollte über das gehaltene Rohr 2 eine grössere Kraft auf den Abschlussbügel X12 einwirken oder falls sich die Verbindungsschrauben X8 aufgrund mechanischer Einwirkungen lockern, kann sich der Abschlussbügel X12 und somit auch das Rohr 2 vom Aufnahmeteil X111 bzw. vom Systemteil X11 lösen.

Die Montage und das Nachjustieren des Abschlussbügels X12 gestaltet sich daher relativ aufwendig, da die Verbindungsschrauben X8 jeweils fest anzuziehen und beim Wechseln der Rohre mit entsprechender Kraft wieder zu lösen sind. Sofern das Rohr vorerst nur provisorisch eingelegt wird, müssen die Verbindungsschrauben X8 trotzdem bereits fest angezogen werden, damit der Abschlussbügel X12 nicht herausfallen kann.

Ferner sind die montierten Rohrschellen X1 mittels Montageschrauben 9 gehalten, die ebenfalls fest montiert werden und eine genügend hohe Festigkeit aufweisen müssen. Bei der Installation der Rohre 2 muss die Rohrschelle X1 jeweils verschraubt und mit einem entsprechendem Aufwand wieder gelöst werden, falls die Rohrschelle X1 neu positioniert werden soll.

Der vorliegenden Erfindung liegt daher die Aufgabe zugrunde, eine verbesserte Rohrschelle der eingangs genannten Art zu schaffen.

Insbesondere ist eine einfach handhabbare Rohrschelle zu schaffen, mittels welcher Leitungen, insbesondere Rohre, schnell und sicher montierbar sind. Bei der Rohrschelle soll das ungewollte Lösen von Teilen der Rohrschelle und das Ausfallen der Leitungen oder Rohre vermieden werden.

Diese Aufgabe wird mit einer Rohrschelle gelöst, welche die in Anspruch 1 angegebenen Merkmale aufweist. Vorteilhafte Ausgestaltungen der Erfindung sind in weiteren Ansprüchen angegeben.

Die der Montage von Leitungen, insbesondere Rohren, dienende Rohrschelle weist ein Systemelement mit einem der Montage der Rohrschelle dienenden Montageteil, und einem der Aufnahme wenigstens einer Leitung dienenden Aufnahmeteil auf, welches an zwei Endstücken mit zwei dazu korrespondierenden Endstücken eines dem Halten der in das Aufnahmeteil eingelegten Leitung dienenden Abschlussbügels derart verbindbar und abschliessbar ist, dass die Leitung vom Aufnahmeteil und vom Abschlussbügel umschlossen ist.

Erfindungsgemäss sind die paarweise einander zugeordneten Endstücke des Aufnahmeteils und des Abschlussbügels mit vorzugsweise parallel zueinander verlaufenden, zumindest endseitig geschlossenen Längsschlitzen versehen, die paarweise je vom Schaft einer mit einer Schraubenmutter verbundenen Verbindungsschraube durchstossen sind und von denen wenigstens ein Paar der zueinander korrespondierenden Längsschlitze mit schräg oder senkrecht zu den Achsen der Längsschlitze verlaufenden Seitenschlitzen versehen ist, von denen wenigstens ein Seitenschlitz nach aussen geöffnet ist, so, dass der Schaft der Verbindungsschraube durch Führung entlang der beiden zueinander korrespondierenden Seitenschlitze vollständig aus dem zugehörigen Endstück entfernt werden kann.

In vorzugsweisen Ausgestaltungen ist daher nur einer der Längsschlitze durch einen nach aussen geöffneten Seitenschlitz geöffnet.

Das Aufnahmeteils und der Abschlussbügel sind daher stets durch ein Paar von Verbindungsschrauben formschlüssig miteinander verbunden und können einseitig nur voneinander gelöst werden, wenn die entsprechende Schraube aus dem Längsschlitz durch den beidseitig geöffneten Seitenschlitz nach aussen geführt wird, so dass der Abschlussbügel aufgeklappt bzw. um die andere Schrauben gedreht werden kann.

Ein Rohr kann daher mit wenigen Handgriffen in die Rohrschelle eingelegt und arretiert werden, indem der Abschlussbügel zurückgeklappt und die entsprechende Verbindungsschraube durch den beidseitig geöffneten Seitenschlitz zurück in den zugehörigen Längsschlitz geführt wird. Das Rohr wird somit bereits nach dem Zurückklappen des Abschlussbügels und dem Zurückführen der Verbindungsschraube formschlüssig gehalten. Das Rohr kann daher bei der provisorischen Montage in die montierten Rohrschellen eingelegt werden, ohne dass die Verbindungsschrauben festgezogen werden.

Anschliessend kann der Bügel angedrückt und durch Anziehen der beiden Verbindungsschrauben fest verschraubt werden.

Das zumindest annähernd rechteckig ausgestaltete Montageteil ist an einer der kürzeren oder einer der längeren Rechteckseiten oder an einer schräg verlaufenden Seite mit den Endstücken des dort gebildeten Aufnahmeteils versehen. Das Montageteil kann derart ausgestaltet sein, dass es senkrecht, waagrecht oder schräg montiert werden kann, wobei das Aufnahmeteil stets nach oben ausgerichtet ist und ein darauf aufgelegtes Rohr tragen kann. Das Rohr kann daher auf das Aufnahmeteil aufgelegt und mittels des Abschlussbügels arretiert werden.

Das Montageteil und das Aufnahmeteil können einstückig miteinander verbunden oder verschraubt sein. Das Montageteil kann ferner flach oder einfach oder mehrfach abgewinkelt sein.

Das Aufnahmeteil und/oder der Abschlussbügel sind vorzugsweise je mit einer zwischen den Endstücken vorgesehenen, vorzugsweise halbkreisförmigen Ausnehmung versehen. Die Ausnehmungen sind vorzugsweise mit Stützelementen versehen, mittels derer Druckstellen am installierten Rohr vermieden werden. Dazu sind beispielsweise die in Figur 1 gezeigten und eingangs beschriebenen Stützelemente verwendbar.

In einer vorzugsweisen Ausgestaltung wird die erfindungsgemässe Rohrschelle mittels eines Montagebügels montiert, der mit Stützen, Auslegern oder Profilteilen verschraubbar und mit zwei koaxial ausgerichteten Schlitzöffnungen versehen ist, durch die das Montageteil der Rohrschelle einführbar und mittels wenigstens einer Montageschraube fixierbar ist.

Der Montagebügel weist vorzugsweise ein der zumindest teilweisen Aufnahme der Stütze, des Auslegers, oder des Profilteils dienendes Zentralstück, oder eine mit diesen Elementen verbindbare Lasche auf. Ferner kann auch das Montageteil selbst die Form des Montagebügels aufweisen und mit dem Aufnahmeteil in einer oder mehreren Lagen verbindbar sein.

In elementaren Ausgestaltungen der erfindungsgemässen Rohrschelle sind die Schraubenmuttern vor dem Einführen der Schrauben in die Längsschlitze zu entfernen und anschliessend wieder anzubringen, was mit einem entsprechenden Aufwand verbunden ist. In einer weiteren vorzugsweisen Ausgestaltung sind vorzugsweise alle Längsschlitze und/oder wenigstens einer der Seitenschlitze mit erweiterten Öffnungen versehen, durch die der Kopf der Verbindungsschraube durchführbar ist. Die beiden Verbindungsschrauben können daher mit aufgesetzter Schraubenmutter durch die erweiterten Öffnungen in die Endstücke des Aufnahmeteils und des Abschlussbügels eingesetzt werden. Dadurch resultiert eine weitere Vereinfachung der Handhabung der Rohrschelle. Ferner können Verbindungsschrauben verwendet werden, die unlösbar mit der Schraubenmutter verbunden sind. Ein unbeabsichtigtes Lösen des Abschlussbügels vom Aufnahmeteil wird dadurch vollständig vermieden. Dazu wird vorzugsweise auch vorgesehen, dass die erweiterten Öffnungen nur durch Krafteinwirkung in eine Position gebracht werden können, in der sie koaxial ausgerichtet sind. Beispielsweise ist dies in einfacher Weise möglich, indem die erweiterten Öffnungen derart angeordnet sind, dass jeweils die Stützelemente deformiert werden müssen, wenn die erweiterten Öffnungen koaxial ausgerichtet werden sollen. Möglich ist auch die Verwendung zusätzlicher elastischer Elemente.

Nachfolgend wird die Erfindung anhand von Zeichnungen näher erläutert. Dabei zeigt:
- Fig. 1: die eingangs beschriebene und aus [1] bekannte Rohrschelle X1;
- Fig. 2: das mit einem Aufnahmeteil X111 und einem Montageteil X112 versehene Systemelement X11 der Rohrschelle X1 von Fig. 1;
- Fig. 2a: das in das Aufnahmeteil X111 oder den Abschlussbügel X12 einsetzbare Federblatt 4;
- Fig. 2b: das auf das Federblatt 4 aufsetzbare Kunststoffteil 5 in zweidimensionaler Darstellung;
- Fig. 2c: das Kunststoffteil 5 von Fig. 2b in dreidimensionaler Darstellung von unten gesehen;
- Fig. 2d: das Kunststoffteil 5 von Fig. 2b in dreidimensionaler Darstellung von oben gesehen;
- Fig. 3: den Abschlussbügel X12 der Rohrschelle X1 von Fig. 1 während dem Einsetzen des mit dem Kunststoffteil 5 versehenen Federblatts 4;
- Fig. 4a-c: eine erste erfindungsgemässe Rohrschelle 1, die vorzugsweise stehend, hängend bzw. senkrecht montiert wird;
- Fig. 5a-c: eine zweite erfindungsgemässe Rohrschelle 1, die vorzugsweise liegend bzw. waagrecht montiert wird;
- Fig. 6a-c: einen mit einer Profilschiene verbindbaren Montagebügel 6 mit Aufnahmeschlitzen 62, 62', in die das Montageteil 11 der erfindungsgemässen Rohrschelle 1 einführbar ist;
- Fig. 7a-b: die mittels des Montagebügels 6 von Figur 6 montierte Rohrschelle 1 von Fig. 5; und
- Fig. 8a-c: die Rohrschelle 1 von Fig. 4 in einer weiteren vorzugsweisen Ausgestaltung.

Figur 1, 2 und 3 zeigen die aus [1] bekannte und eingangs beschriebene Rohrschelle X1 sowie Teile davon.

Die Figuren 2a - 2d zeigen die eingangs beschriebenen Stützelemente 4, 5, die bei der erfindungsgemässen Rohrschelle 1 unverändert einsetzbar sind. Selbstverständlich sind bei der erfindungsgemässen Rohrschelle 1 auch anders ausgestaltete Stützelemente einsetzbar.

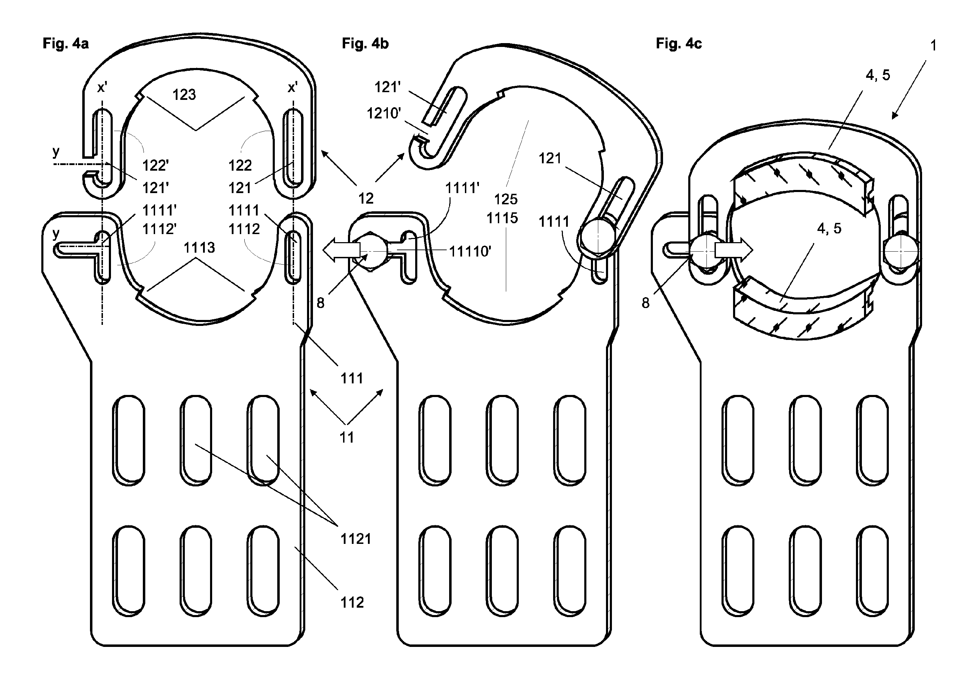

Die Figuren 4a bis 4c zeigen eine erste erfindungsgemässe Rohrschelle 1, die vorzugsweise stehend, hängend bzw. senkrecht montiert wird und die aus einem Systemelement 11 und einem Abschlussbügel 12 (siehe Figur 4a) besteht, welche mittels Verbindungsschrauben 8 miteinander verbunden werden (siehe die Figuren 4b und 4c). In Figur 4c ist die erfindungsgemässe Rohrschelle 1 in gleicher Weise mit Stützelementen 4, 5 ergänzt, wie die bekannte Rohrschelle von Figur 1. Das Systemelement 11 und der Abschlussbügel 12 sind dazu mit zum Halten der Stützelemente 4, 5 dienenden Haken 1113, 123 versehen (siehe Figur 4a).

Das Systemelement 11 weist ein der Montage der Rohrschelle 1 dienendes, zumindest annähernd rechteckförmiges, mit Montageöffnungen 1121 versehenes Montageteil 112 auf, das an einem Ende einstückig mit einem der Aufnahme wenigstens eines Rohres 2 dienenden Aufnahmeteil 111 verbunden ist, welches zwei Endstücke 1112; 1112' und eine dazwischen liegende halbkreisförmige Ausnehmung 1115 (siehe Figur 4b) aufweist, in die das in Figur 1 gezeigte Rohr 2 eingelegt werden kann.

Die Rohrschelle 1 weist ferner einen Abschlussbügel 12 auf, der Endstücke 122; 122' und eine dazwischen liegende halbkreisförmige Ausnehmung 125 (siehe Figur 4b) aufweist, in die das in Figur 1 gezeigte Rohr 2 eingelegt werden kann.

Die Endstücke 1112; 1112' des Aufnahmeteils 111 und die Endstücke 122; 122' des Abschlussbügels 12 sind paarweise je mit einer Verbindungsschraube 8 miteinander verbindbar. Der Abschlussbügel 12 kann daher derart mit dem Aufnahmeteil 111 verbunden werden, dass das eingelegte Rohr 2 fast kreisförmig umschlossen wird.

Die paarweise einander zugeordneten Endstücke 1112, 122 bzw. 1112', 122' des Aufnahmeteils 111 und des Abschlussbügels 12 sind je mit parallel zueinander entlang von Achsen x, x' ausgerichteten Längsschlitzen 1111, 121 bzw. 1111', 121' versehen, die paarweise je zur Aufnahme des Schafts 81 einer Verbindungsschraube 8 dienen, auf den eine Schraubenmutter 85 aufgesetzt werden kann.

Ein Paar der zueinander korrespondierenden Längsschlitze 1111', 121' ist mit senkrecht zur Achse x' verlaufenden Seitenschlitzen 11110', 1210' versehen. Der am Abschlussbügel 12 vorgesehene Seitenschlitz 1210' ist nach aussen und gegen den Längsschlitz 121' geöffnet, so dass der Schaft 81 der Verbindungsschraube 8 von aussen durch den Seitenschlitz 1210' in den Längsschlitz 121' einführbar und daraus wieder entfernbar ist.

Die Länge des nur einseitig gegen den zugehörigen Längsschlitz 1111' geöffneten Seitenschlitzes 11110' am Aufnahmeteil 111 ist derart gewählt, dass der Schaft 81 der Verbindungsschraube 8 darin soweit verschoben werden kann, bis er vollständig aus dem dazu korrespondierenden beidseitig geöffneten Seitenschlitz 1210' des Abschlussbügels 12 austreten kann. Während die erste Verbindungsschraube 8 stets mit dem Aufnahmeteil 111 verbunden bleibt, kann sie daher vollständig vom Abschlussbügel 12 gelöst werden, so dass der Abschlussbügel 12 um die zweite Verbindungsschraube 8 gedreht (siehe Figur 4b) und zur Aufnahme des Rohres 2 geöffnet und anschliessend wieder geschlossen werden kann (siehe Figur 4c). Die Längsschlitze 1111, 121 bzw. 1111', 121' erlauben die gegenseitige Verschiebung des Aufnahmeteils 111 und des Abschlussbügels 12 zur Anpassung an oder zum Lösen eines installierten Rohrs 2.

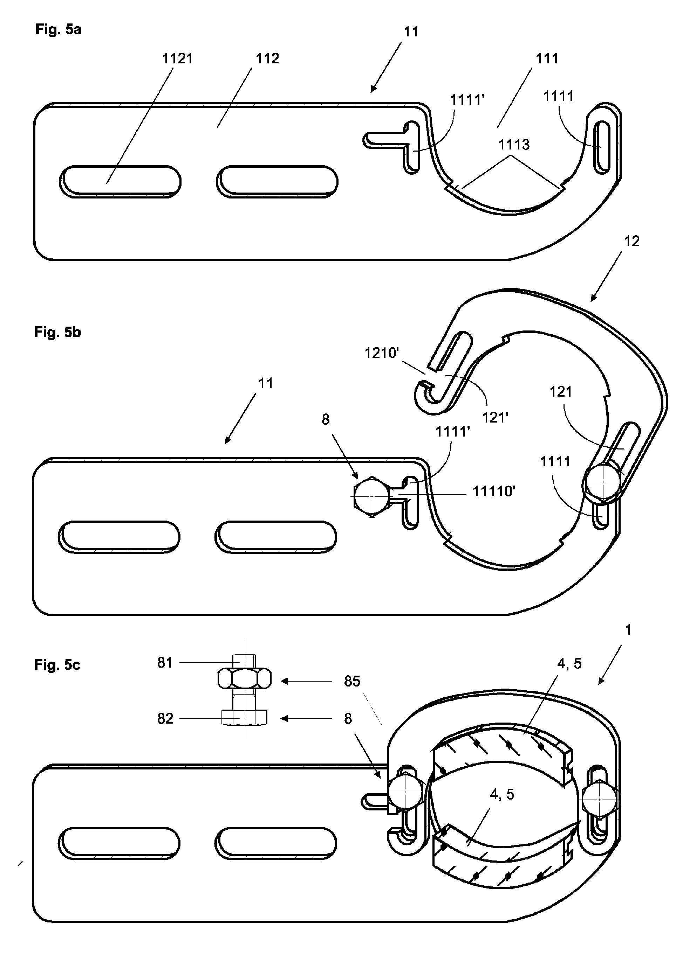

Die Figuren 5a, 5b und 5c zeigen eine erfindungsgemässe Rohrschelle 1, die liegend bzw. waagrecht montierbar ist. Das wiederum zumindest annähernd rechteckig ausgestaltete Montageteil 112 weist an einer der längeren Rechteckseiten die Endstücke 1112, 1112' des dort gebildeten Aufnahmeteils 111 auf, so dass das installierte Rohr 2 bei waagrechter Ausrichtung des Montageteils 112 durch das Aufnahmeteil 111 von unten gestützt ist.

Figur 5a zeigt das Systemelement 11. Figur 5b zeigt das einseitig mit dem Abschlussbügel 12 versehene Systemelement 11 und Figur 5c zeigt die mit Stützelementen 4, 5 versehene zusammengesetzte Rohrschelle 1.

Das Montageteil 12 der Rohrschelle 1 kann beliebig ausgestaltet, beispielsweise ein- oder mehrfach abgewinkelt und mit beliebigen Montageöffnungen 1121 versehen sein, sodass es an Trägern, Stützen, Auslegern, Profilteilen oder direkt an Wände oder Decken, montiert werden kann.

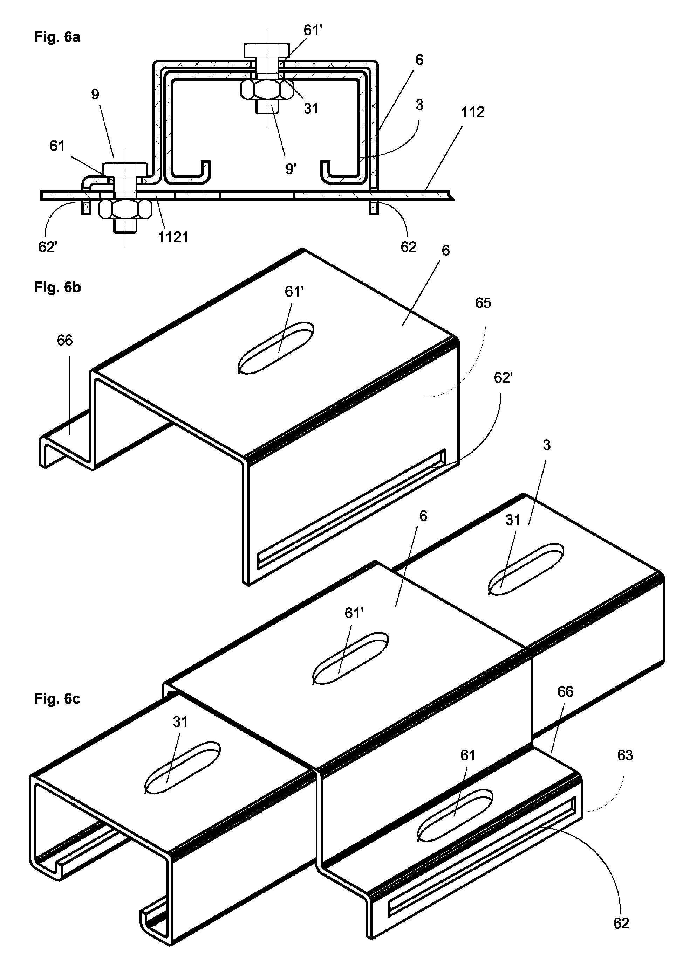

Für die Montage der Rohrschelle 1 ist jedoch die Verwendung des in den Figuren 6a, 6b und 6c gezeigten Montagebügels 6 besonders vorteilhaft, der mit Öffnungen 61, 61' zur Durchführung von Montageschrauben 9, 9' versehen ist, mittels derer der Montagebügel 6 einerseits mit einer Profilschiene 3, und andererseits mit dem Montageteil 112 einer erfindungsgemässen Rohrschelle 1 verbindbar ist. Der Montagebügel 6, der die Profilschiene 3 an drei Seiten umfasst, weist zwei koaxial ausgerichtete Schlitzöffnungen 62, 62' auf, durch die das Montageteil 112 einführbar ist. Ferner weist der Montagebügel 6 ein Fusselement 66 mit einer Montageöffnung 61 auf, durch die, sowie durch eine Montageöffnung 1121 im Montageteil 112 der Rohrschelle 1 hindurch der Schaft einer Montageschraube 9 führbar ist.

Figur 6a zeigt den Schnitt durch einen Montagebügel 6, eine darin gehaltene Profilschiene 3, sowie ein durch die Schlitzöffnungen 62, 62' eingeführtes Montageteil 112. Die Profilschiene 3, die vom Montagebügel 6 und zusammen mit dem Montageteil 112 vollständig umschlossen ist, ist mittels einer Montageschraube 9' mit dem Montagebügel 6 verbunden. Das Fusselement 66 des Montagebügels 6 ist mit dem Montageteil 112 verschraubt. Möglich wäre auch die Verwendung nur einer Montageschraube, die den Montagebügel 6, die Profilschiene 3 und das Montageteil 112 miteinander verbindet. Am Fussteil 66 ist das mit einer Schlitzöffnung 62 versehene Endstück 63 abgewinkelt. Möglich ist ferner die Verwendung eines Fussteils 66, das beidseitig mit Schlitzöffnungen 62, 62' versehene Endstücke 63 aufweist, und anstelle des Zentralstücks 65 zusätzlich mit einer Lasche oder einem abgewinkelten Flügel versehen ist, der mit der Profilschiene 3 oder weiteren Installationsvorrichtungen verschraubbar ist.

Figur 6b zeigt den Montagebügel 6 von der einen Seite. Figur 6c zeigt den die Profilschiene 3 umschliessenden Montagebügel 6 von der entgegengesetzten Seite.

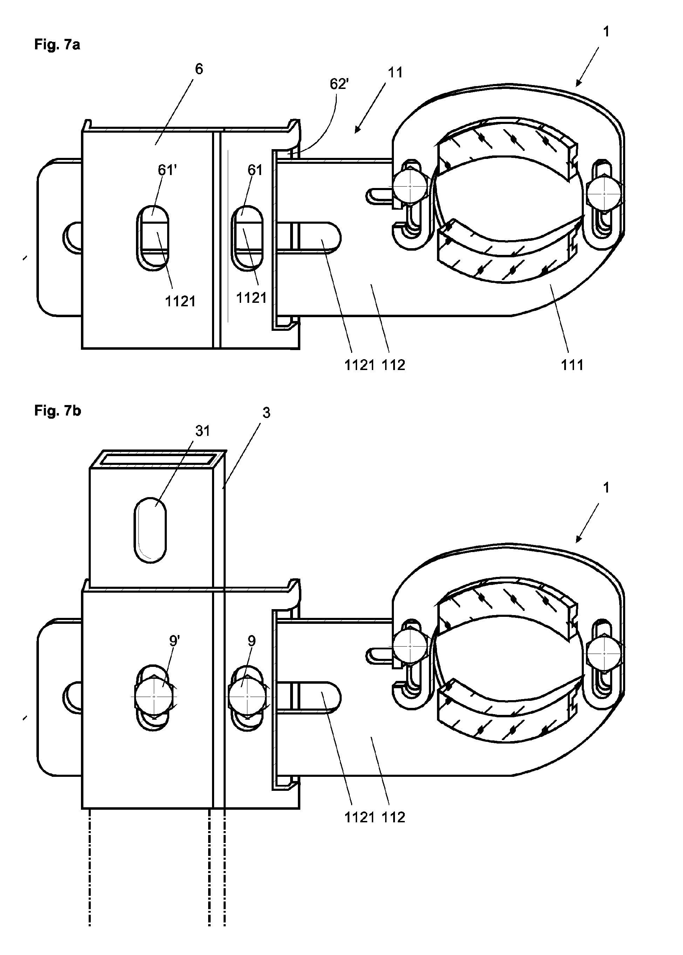

Figur 7a zeigt die mit dem Montagebügel 6 von Figur 6 gehaltene Rohrschelle 1 von Fig. 5.

Figur 7b zeigt die mittels des Montagebügels 6 von Figur 6 mit der Profilschiene 3 verbundene Rohrschelle 1 von Fig. 5.

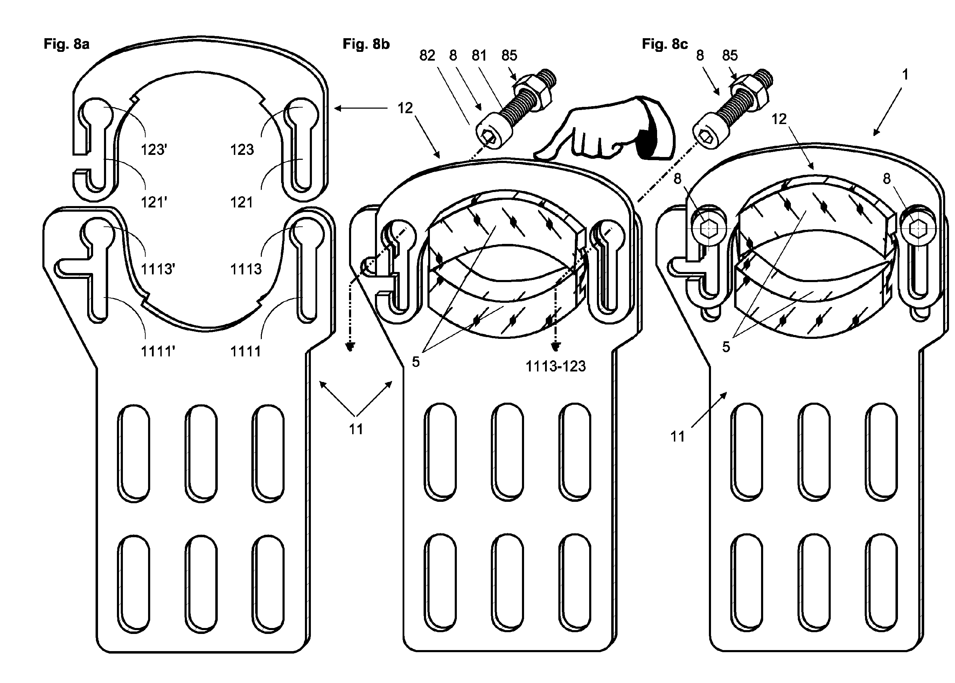

Die Figuren 8a, 8b und 8c zeigen die Rohrschelle 1 von Fig. 4 in einer weiteren vorzugsweisen Ausgestaltung.

Aus Figur 8a ist ersichtlich, dass jeder der Längsschlitze 1111, 121 bzw. 1111', 121' des Aufnahmeteils 111 und des Abschlussbügels 12 mit einer erweiterten Öffnung 1113; 1113'; 123 bzw. 123' versehen ist, durch die der entsprechend gewählte Kopf 82 einer Verbindungsschraube 8 durchführbar ist. Die erweiterten Öffnungen 1113; 1113'; 123 bzw. 123' sind vorzugsweise an den unteren oder oberen Enden der Längsschlitze 1111, 121 bzw. 1111', 121' an einer Stelle vorgesehen, die ausserhalb des Installationsbereichs der Verbindungsschraube 8 liegt.

Wie in Figur 8b gezeigt, werden die erweiterten Öffnungen 1113; 1113'; 123 bzw. 123' durch Verschieben des Abschlussbügels 12 paarweise koaxial ausgerichtet, wonach die Köpfe 82 der mit den Schraubenmuttern 85 versehenen Verbindungsschrauben 8 in die erweiterten Öffnungen 1113; 1113' einführbar sind.

Die Schraubenmuttern 85 müssen daher nicht von den Verbindungsschrauben 8 gelöst werden. Vorzugsweise ist vorgesehen, dass die Schraubenmuttern 85 gar nicht von den Verbindungsschrauben 8 gelöst werden können, so dass die Teile der Rohrschelle 1 nach dem Einsetzen der Verbindungsschrauben 8, wenn auch lose, stets formschlüssig miteinander verbunden bleiben.

Wie in Figur 8b gezeigt, werden beim koaxialen Ausrichten der erweiterten Öffnungen 1113, 123 bzw. 1113', 123' die elastischen Stützelemente 4, 5 leicht deformiert, so dass eine Rückstellkraft resultiert, die verhindert, dass der Abschlussbügel 12 sich selbsttätig soweit verschieben kann, bis die erweiterten Öffnungen 1113; 1113'; 123 bzw. 123' wieder koaxial ausgerichtet sind und die Verbindungsschrauben 8 sich aus den Längsschlitze 1111, 121 bzw. 1111', 121' lösen. Die Rückstellkraft bewirkt, dass der Abschlussbügel 12 soweit zurückgestossen wird, bis die erweiterten Öffnungen 1113, 123 bzw. 1113', 123' nicht mehr koaxial ausgerichtet sind.

## Patentansprüche

1. Rohrschelle (1) für die Montage von Leitungen (2), insbesondere Rohren, mit einem Systemelement (11), das ein der Montage der Rohrschelle (1) dienendes Montageteil (112) und ein der Aufnahme wenigstens einer Leitung (2) dienendes Aufnahmeteil (111) aufweist, welches an zwei Endstücken (1112; 1112') mit zwei dazu korrespondierenden Endstücken (122; 122') eines dem Halten der in das Aufnahmeteil (111) eingelegten Leitung (2) dienenden Abschlussbügels (12) derart verbindbar und abschliessbar ist, dass die Leitung (2) vom Aufnahmeteil (111) und vom Abschlussbügel (12) umschlossen ist, **dadurch gekennzeichnet, dass** die paarweise einander zugeordneten Endstücke (1112, 122 bzw. 1112', 122') des Aufnahmeteils (111) und des Abschlussbügels (12) mit zumindest endseitig geschlossenen Längsschlitzen (1111, 121 bzw. 1111', 121') versehen sind, die paarweise je vom Schaft (81) einer mit einer Schraubenmutter (85) verbundenen Verbindungsschraube (8) durchstossen sind und von denen wenigstens ein Paar der zueinander korrespondierenden Längsschlitze (1111, 121) und/oder (1111', 121') mit schräg oder senkrecht zu den Achsen (x) der Längsschlitze (1111, 121) verlaufenden Seitenschlitzen (11110', 1210') versehen ist, von denen wenigstens ein Seitenschlitz (1210') nach aussen geöffnet ist, so dass der Schaft (81) der Verbindungsschraube (8) durch Führung entlang der beiden zueinander korrespondierenden Seitenschlitze (11110', 1210') vollständig aus dem zugehörigen Endstück (122') entfernt werden kann.

2. Rohrschelle (1) nach Anspruch 1, **dadurch gekennzeichnet, dass** die Achsen (x) der Längsschlitze (1111, 1111' bzw. 121, 121') nach dem Schliessen des Abschlussbügels (12) zumindest annähernd parallel zueinander verlaufen.

3. Rohrschelle (1) nach Anspruch 1 oder 2, **dadurch gekennzeichnet, dass** der nach aussen und gegen den zugehörigen Längsschlitz (121') geöffnete Seitenschlitz (1210') an einem der Endstücke (122; 122') des Abschlussbügels (12) vorgesehen ist.

4. Rohrschelle (1) nach Anspruch 1, 2 oder 3, **dadurch gekennzeichnet, dass** die Länge des nur einseitig gegen den zugehörigen Längsschlitz (1111') geöffneten Seitenschlitzes (11110') derart gewählt ist, dass der Schaft (81) der Verbindungsschraube (8) darin soweit verschoben werden kann, bis er vollständig aus dem dazu korrespondierenden beidseitig geöffneten Seitenschlitz (1210') austreten kann.

5. Rohrschelle (1) nach einem der Ansprüche 1 bis 4, **dadurch gekennzeichnet, dass** das zumindest annähernd rechteckig ausgestaltete Montageteil (112) an einer der kürzeren oder einer der längeren Rechteckseiten oder an einer schräg verlaufenden Seite mit den Endstücken (1112, 1112') des dort gebildeten Aufnahmeteils (111) versehen ist.

6. Rohrschelle (1) nach einem der Ansprüche 1 bis 5, **dadurch gekennzeichnet, dass** das Aufnahmeteil (111) und/oder der Abschlussbügel (12) mit einer zwischen den Endstücken (1112, 1112' bzw. 122, 122') vorgesehenen, vorzugsweise halbkreisförmigen Ausnehmung (1115; 125) versehen sind, die vorzugsweise mit elastischen Stützelementen (4, 5) versehen sind; und/oder dass das flache oder abgewinkelte Montageteil (112) und das Aufnahmeteil (111) einstückig miteinander verbunden oder miteinander verschraubt sind.

7. Rohrschelle (1) nach einem der Ansprüche 1 bis 6, **dadurch gekennzeichnet, dass** ein der Verbindung mit Stützen, Auslegern, oder Profilteilen (3) dienender Montagebügel (6) vorgesehen ist, der mit zwei koaxial ausgerichteten Schlitzöffnungen (62, 62') versehen ist, durch die das Montageteil (112) einführbar und mittels wenigstens einer Montageschraube (9) fixierbar ist.

8. Rohrschelle (1) nach Anspruch 7, **dadurch gekennzeichnet, dass** der mit den Stützen, Auslegern, oder Profilteilen (3) verschraubbare Montagebügel (6) ein der zumindest teilweisen Aufnahme der Stütze, des Auslegers, oder des Profilteils (3) dienendes Zentralstück (65) oder eine Lasche aufweist.

9. Rohrschelle (1) nach einem der Ansprüche 1 bis 8, **dadurch gekennzeichnet, dass** wenigstens einer der Längsschlitze (1111, 121 bzw. 1111', 121') und/oder wenigstens einer der Seitenschlitze (11110', 1210') mit erweiterten Öffnungen (1113, 1113', 123, 123') versehen ist, durch die der Kopf (82) der Verbindungsschraube (8) durchführbar ist.

10. Rohrschelle (1) nach Anspruch 9, **dadurch gekennzeichnet, dass** vorzugsweise alle Längsschlitze (1111, 121 bzw. 1111', 121') mit erweiterten Öffnungen (1113, 1113', 123, 123') versehen sind, die durch Verschieben des Abschlussbügels (12) paarweise koaxial ausrichtbar sind, wobei in dieser Lage vorzugsweise wenigstens eines der Stützelemente (4, 5) durch Krafteinwirkung deformiert wird.
